# EUROPEAN PATENT APPLICATION

(11) **EP 4 716 001 A1**
(43) Date of publication of application: **25.03.2026**
(21) Application number: 24849621.8
(22) Date of filing: 31.07.2024
(51) Int. Cl.: H01M 50/581, H01M 50/559, H01M 50/179, H01M 50/152

(54) **TOP CAP, CAP ASSEMBLY INCLUDING SAME, AND SECONDARY BATTERY**

(30) Priority: 01.08.2023 KR 20230100647
(71) Applicant: LG Energy Solution, Ltd., Seoul 07335 (KR)
(72) Inventor: KANG, Gyung Soo, Daejeon 34122 (KR); JEONG, Yeon Beom, Daejeon 34122 (KR)
(74) Representative: Goddar, Heinz J.
(86) International application number: PCT/KR2024/011273
(87) International publication number: WO 2025/029054

(57) **Abstract**

A top cap of the present disclosure includes a supply portion that supplies electricity to an external circuit; a terminal portion that supplies electricity to the supply portion; and an electricity cut-off portion that electrically connects the supply portion and the terminal portion or disconnects them so as not to conduct electricity depending on the deformation temperature, wherein the electricity cut-off portion includes an insulator provided between the supply portion and the terminal portion and allowing the supply portion and the terminal portion to be spaced apart so as not to contact each other; and a deformation body that electrically connects the supply portion and the terminal portion below the deformation temperature and is deformed above the deformation temperature to disconnect the supply portion and the terminal portion so as not to conduct electricity.

## Description

### TECHNICAL FIELD

### CROSS-REFERENCE TO RELATED APPLICATIONS

The present application claims priority to Korean Patent Application No. 10-2023-0100647 filed on August 1, 2023 in the Republic of Korea, the disclosures of which are incorporated herein by reference.

### TECHNICAL FIELD

The present disclosure relates to a top cap capable of improving safety by applying a shape memory alloy, a cap assembly including the same, and a secondary battery.

### BACKGROUND ART

In general, a secondary battery is classified into a cylindrical secondary battery in which an electrode assembly is embedded into a cylindrical metal can, a prismatic secondary battery in which an electrode assembly is embedded into a prismatic metal can, and a pouch-type secondary battery in which an electrode assembly is embedded into a pouch-type case, depending on the shape of a battery case.

Additionally, the electrode assembly is composed of a stacked structure of a positive electrode/separator/negative electrode, and such an electrode assembly is classified into a jelly-roll type structure in which a separator is interposed between a long sheet-like positive electrode and negative electrode coated with an active material and wound, and a stack type structure in which a plurality of positive electrodes and negative electrodes of a predetermined size are sequentially stacked with a separator interposed therebetween.

Among them, the jelly-roll type electrode assembly is the most widely manufactured because it has the advantages of easy manufacturing and high energy density per weight, and the jelly-roll type electrode assembly is typically manufactured as a cylindrical secondary battery.

That is, the cylindrical secondary battery includes an electrode assembly, a can that accommodates the electrode assembly, and a cap assembly mounted on an opening of the can.

Such a cylindrical secondary battery may be deformed while the jelly-roll type electrode assembly repeatedly expand and contract during charging and discharging, thereby causing an internal short circuit. As a result, gases are generated as the organic solvent is decomposed due to heat generated by the internal short circuit, and the secondary battery may explode or rupture due to an increase in gas pressure inside the secondary battery.

To solve the above problems, the cap assembly of the cylindrical secondary battery includes a safety vent that discharges high-pressure gas and a current interrupt device (CID) that cuts off the current when the internal pressure of the secondary battery rises.

However, conventional cylindrical secondary batteries have limitations in increasing safety as high capacity is realized, and accordingly, there is a need for structural improvement to increase the safety of the secondary battery.

### [Prior art literature]

### [Patent literature]

Patent Publication No. 10-2018-0000115.

### SUMMARY

### TECHNICAL PROBLEM

The present disclosure is directed to providing a top cap, a cap assembly including the same, and a secondary battery, which may rapidly cut off a current when a high temperature occurs by including an electricity cut-off portion applying a shape memory alloy to the top cap, thereby significantly improving safety.

### TECHNICAL SOLUTION

A top cap of the present disclosure may include a supply portion that supplies electricity to an external circuit; a terminal portion that supplies electricity to the supply portion; and an electricity cut-off portion that electrically connects the supply portion and the terminal portion or disconnects them so as not to conduct electricity depending on the deformation temperature, wherein the electricity cut-off portion may include an insulator provided between the supply portion and the terminal portion and allowing the supply portion and the terminal portion to be spaced apart so as not to contact each other; and a deformation body that electrically connects the supply portion and the terminal portion below the deformation temperature and is deformed above the deformation temperature to disconnect the supply portion and the terminal portion so as not to conduct electricity.

The deformation body may be made of a shape memory alloy that contracts above the deformation temperature.

The deformation temperature may be 70 °C or higher.

The deformation body may have a shape surrounding the outside of the insulator.

The insulator may have a cylindrical shape, and the deformation body may have a circular ring shape surrounding the insulator.

One end of the deformation body may be fixed to the supply portion or the terminal portion.

The height of the electricity cut-off portion may be formed to be 2 mm to 12 mm.

The terminal portion may include a terminal surface that supplies electricity to the supply portion, and a coupling surface provided below the terminal surface and having a larger diameter than the terminal surface, wherein the supply portion and the electricity cut-off portion may have the same diameter as the terminal surface.

Meanwhile, a cap assembly according to Embodiment 1 of the present disclosure may include a top cap that supplies electricity to an external circuit; a safety element (Positive Temperature Coefficient element) provided below the top cap; a safety vent (Current Interrupt Device) provided below the safety element; a bottom cap provided below the safety vent; and a first insulator provided between the safety vent and the bottom cap.

The safety vent may include a first deformation body that electrically contacts the bottom cap below the deformation temperature and is deformed above the deformation temperature to be electrically separated from the bottom cap.

The first deformation body may be made of a shape memory alloy that contracts above the deformation temperature.

The first deformation body may include a contact portion that protrudes to contact the bottom cap and a non-contact portion that does not contact the bottom cap, and a second insulator may be provided between the non-contact portion and the bottom cap.

The safety vent may further include a second deformation body provided on the upper surface of the first deformation body that does not face the bottom cap and having insulating properties.

The second deformation body may be made of a shape memory polymer that is not deformed below the deformation temperature and is deformed above the deformation temperature.

Meanwhile, a secondary battery of the present disclosure may include a cap assembly including a top cap.

### ADVANTAGEOUS EFFECTS

The top cap of the present disclosure includes a supply portion, a terminal portion, and an electricity cut-off portion that electrically connects the supply portion and the terminal portion or disconnects them so as not to conduct electricity depending on the deformation temperature, wherein the electricity cut-off portion includes an insulator and a deformation body, so that the current may be rapidly cut off when a high temperature occurs, thereby significantly improving safety.

Additionally, the deformation body in the top cap of the present disclosure is made of a shape memory alloy that contracts above the deformation temperature, so that the deformation body is rapidly deformed by high temperature, and as a result, the supply portion and the terminal portion may be rapidly separated, thereby rapidly cutting off electricity.

Additionally, the deformation body in the top cap of the present disclosure has a shape surrounding the outside of the insulator, so that the fixing force of the deformation body may be increased. In particular, the deformation body is freely movably coupled to the insulator, so that interference of the insulator may be prevented when the deformation body is deformed.

Additionally, the insulator in the top cap of the present disclosure has a cylindrical shape, and the deformation body has a circular ring shape surrounding the insulator, so that the entire deformation body may be uniformly contracted.

Additionally, one end of the deformation body in the top cap of the present disclosure is fixed to the supply portion or the terminal portion, so that the flow phenomenon of the deformation body and the resulting noise generation may be prevented in advance.

### BRIEF DESCRIPTION OF THE DRAWINGS

FIG. 1 is a perspective view showing a secondary battery according to Embodiment 1 of the present disclosure.
FIG. 2 is a partially enlarged cross-sectional view of FIG. 1.
FIG. 3 is a perspective view showing a top cap according to Embodiment 1 of the present disclosure.
FIG. 4 is a cross-sectional view of FIG. 3.
FIG. 5 is a cross-sectional view showing a state in which a deformation body of a secondary battery according to Embodiment 1 of the present disclosure is contracted.
FIG. 6 is a cross-sectional view showing a safety vent of a secondary battery according to Embodiment 1 of the present disclosure.
FIG. 7 is a cross-sectional view showing a state in which a safety vent of a secondary battery according to Embodiment 1 of the present disclosure is contracted.
FIG. 8 is a perspective view showing a top cap according to Embodiment 2 of the present disclosure.
FIG. 9 is a cross-sectional view showing a state in which a deformation body of a secondary battery according to Embodiment 2 of the present disclosure is contracted.

### DETAILED DESCRIPTION

Hereinafter, embodiments of the present disclosure will be described in detail with reference to the accompanying drawings to enable those having ordinary skill in the technical field pertaining to the present disclosure to easily carry out the present disclosure. However, the present disclosure may be embodied in many different forms and is not limited to the embodiments described herein. And, to clearly describe the present disclosure in the drawings, irrelevant descriptions are omitted, and similar reference numerals are affixed to the similar elements throughout the specification.

### [Secondary battery according to embodiment 1 of the present disclosure]

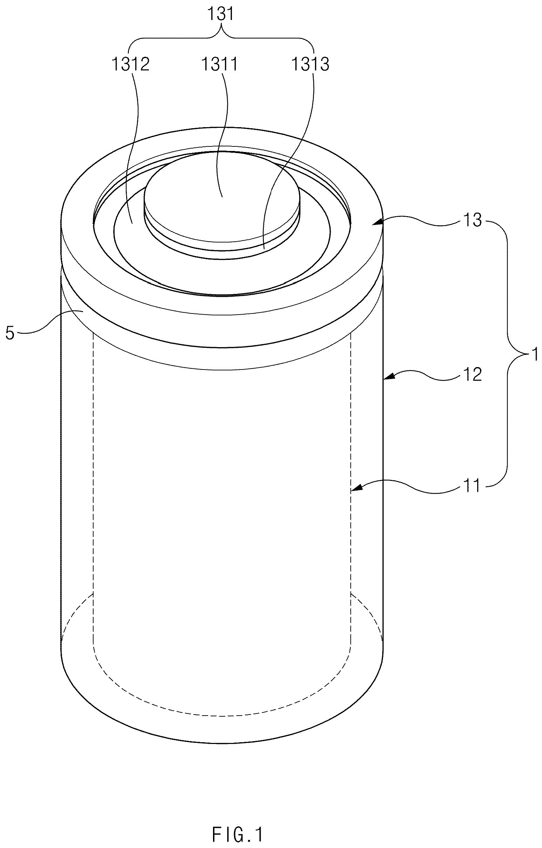

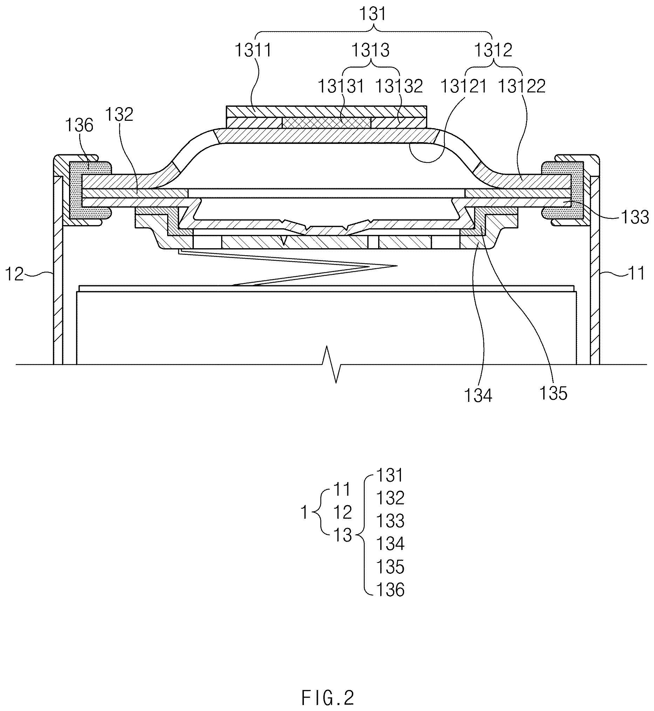

FIG. 1 is a perspective view showing a secondary battery according to Embodiment 1 of the present disclosure, and FIG. 2 is a partially enlarged cross-sectional view of FIG. 1.

The secondary battery 1 of the present disclosure includes an electrode assembly 11, a can 12 accommodating the electrode assembly 11, and a cap assembly 13 mounted on an opening of the can 12, as shown in FIGS. 1 and 2.

### Electrode assembly

The electrode assembly 11 includes two electrodes having different polarities and a wide plate shape in the form of a roll, and a separator interposed between the electrodes or disposed below or above any one of the electrodes to insulate the electrodes from each other, wherein the two electrodes and the separator have a structure in which they are wound in the form of a 'jelly roll'.

And, the two electrodes have structures in which an active material slurry is applied to a current collector in the form of a metal foil or metal mesh including aluminum and copper, respectively.

Here, the two electrodes may be a positive electrode and a negative electrode.

Meanwhile, the positive electrode is provided with a positive electrode tab, and the positive electrode tab is connected to the cap assembly 13. And, the negative electrode is provided with a negative electrode tab, and the negative electrode tab is connected to the bottom surface of the can 12.

### Can

As shown in FIG. 1, the can 12 is made of a lightweight conductive metal material such as aluminum or an aluminum alloy, and has a cylindrical structure having an open top and a closed bottom opposite to the open top. And, the electrode assembly 11 and an electrolyte solution (not shown) are accommodated inside the can 12.

Meanwhile, the electrolyte solution is intended to move lithium ions generated by an electrochemical reaction in the positive electrode and the negative electrode during charging and discharging of the secondary battery. For example, the electrolyte solution may be a non-aqueous organic electrolyte solution that is a mixture of a lithium salt and a high purity organic solvent, or a polymer using a polymer electrolyte.

### Cap assembly

The cap assembly 13 is mounted on the opening of the can 12, and includes a top cap 131 that supplies electricity to an external circuit, a safety element 132 (Positive Temperature Coefficient element) provided below the top cap 131, a safety vent 133 (Current Interrupt Device) provided below the safety element 132, a bottom cap 134 provided below the safety vent 133, a first insulator 135 provided between the safety vent 133 and the bottom cap 134, and a gasket 136 that surrounds the edges of the top cap 131, the safety element 132 and the safety vent 133 and is coupled to the opening of the can.

On the other hand, high-temperature gas may be generated in the secondary battery 1 as the organic solvent is decomposed due to heat generated by an internal short circuit during charging and discharging, and accordingly, an explosion or rupture may occur due to an increase in gas pressure inside the secondary battery 1.

In order to solve the above problem, the secondary battery 1 of the present disclosure includes the top cap 131 capable of rapidly cutting off the current when a high temperature occurs.

That is, the top cap 131 includes a deformation body 13132 that is deformed and cuts off electricity when high heat is generated, and the safety of the secondary battery may be improved by the deformation body 13132.

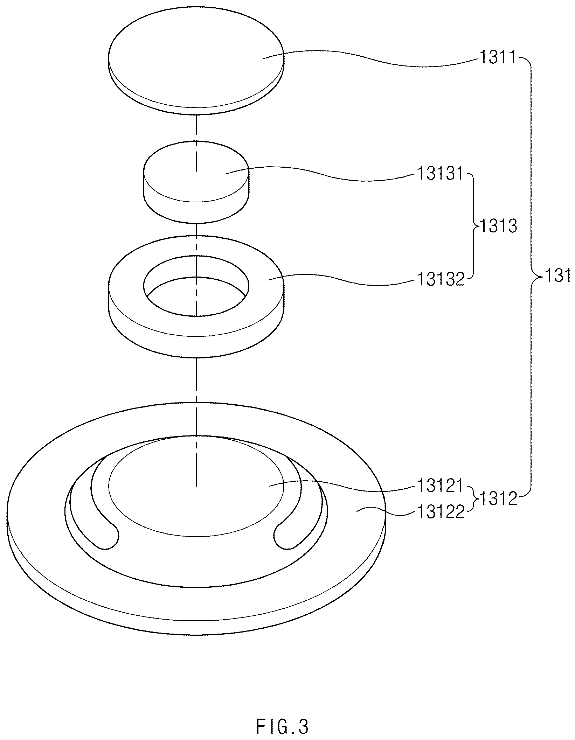

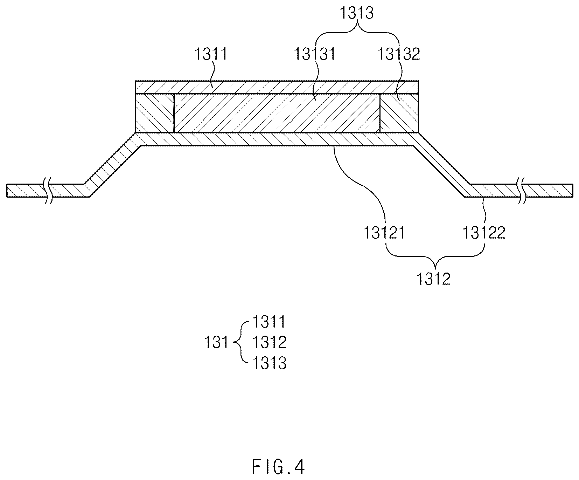

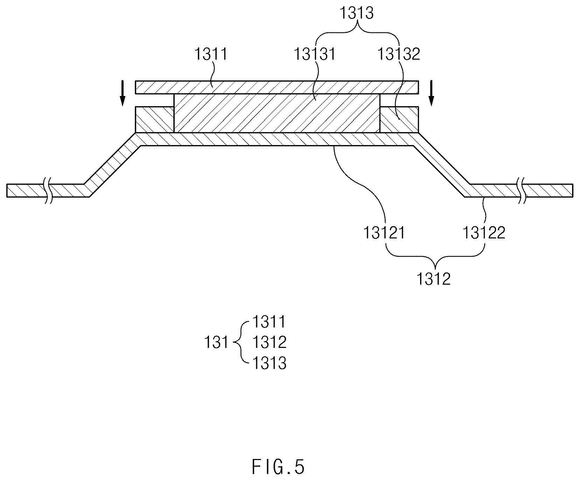

FIG. 3 is a perspective view showing a top cap according to Embodiment 1 of the present disclosure, FIG. 4 is a cross-sectional view of FIG. 3, and FIG. 5 is a cross-sectional view showing a state in which a deformation body of a secondary battery according to Embodiment 1 of the present disclosure is contracted.

More specifically, the top cap 131 includes a supply portion 1311, a terminal portion 1312, and an electricity cut-off portion 1313, as shown in FIGS. 3 to 5.

The supply portion 1311 is made of a metal material that conducts electricity and has a structure that supplies electricity to an external circuit. For example, the supply portion 1311 has a metal plate shape. Meanwhile, the supply portion 1311 may be aluminum or an aluminum alloy.

The terminal portion 1312 is for supplying electricity to the supply portion 1311, and includes a terminal surface 13121 corresponding to the supply portion 1311 and supplying electricity to the supply portion 1311, and a coupling surface 13122 provided below the terminal surface 13121, having a larger diameter than the terminal surface 13121 and having a gasket 136 coupled to the edge thereof.

Here, the terminal portion 1312 may be made of the same material as the supply portion 1311. That is, the terminal portion 1312 may be aluminum or an aluminum alloy.

The electricity cut-off portion 1313 has a structure that electrically connects the supply portion 1311 and the terminal portion 1312 or disconnects them so as not to conduct electricity, depending on the deformation temperature.

That is, the electricity cut-off portion 1313 has a structure that electrically connects the supply portion 1311 and the terminal portion 1312 below the deformation temperature and separates the supply portion 1311 and the terminal portion 1312 so as not to conduct electricity above the deformation temperature.

For example, the electricity cut-off portion 1313 includes an insulator 13131 and a deformation body 13132.

The insulator 13131 is provided between the supply portion 1311 and the terminal portion 1312 and allows the supply portion 1311 and the terminal portion 1312 to be spaced apart so as not to contact each other. In particular, the insulator 13131 may be made of a polyethylene (PE) material that is not electrically conductive.

And, both ends of the insulator 13131 may be coupled to the supply portion 1311 and the terminal portion 1312, respectively, by an adhesive or thermal fusion, thereby increasing the coupling properties between the supply portion 1311, the insulator 13131, and the terminal portion 1312.

In particular, the insulator 13131 may be made of an insulating material having a cushioning force. In particular, the insulator 13131 may be made of a material that is compressed when a force greater than a certain amount is applied, rather than a material such as sponge. Accordingly, an external impact transmitted from the supply portion 1311 may be cushioned, and as a result, the secondary battery may be stably protected from the external impact.

The deformation body 13132 electrically connects the supply portion 1311 and the terminal portion 1312 below the deformation temperature, and is deformed above the deformation temperature to disconnect the supply portion 1311 and the terminal portion 1312 so as not to conduct electricity.

That is, both ends of the deformation body 13132 are connected to the supply portion 1311 and the terminal portion 1312, respectively, so that the supply portion 1311 and the terminal portion 1312 are electrically connected below the deformation temperature. Thereafter, when a temperature of the secondary battery rises above the deformation temperature, the deformation body 13132 contracts to block the connection between the supply portion 1311 or the terminal portion 1312, resulting in disconnecting the supply portion 1311 and the terminal portion 1312 so as not to conduct electricity.

Here, the deformation body 13132 may be made of a shape memory alloy that contracts above the deformation temperature. A shape memory alloy refers to an alloy that remembers its original shape even when deformed by applying a force, and immediately returns to its original shape with a little heating. That is, the shape memory alloy originated from the discovery of shape memory effect of a nickel-titanium alloy, and the shape memory effect is a phenomenon in which a shape memorized at a high temperature is remembered forever, and no matter how severe the deformation is at a low temperature, it immediately returns to its original shape with a little heating.

Examples of the shape memory alloy include a nickel-titanium alloy, a copper-zinc alloy, a gold-cadmium alloy, an indium-thallium alloy, and the like.

In this way, when high heat above the deformation temperature is transmitted to the deformation body 13132 in the secondary battery 1 according to Embodiment 1 of the present disclosure, the deformation body 13132 contracts to separate the deformation body 13132 from the supply portion 1311, the terminal portion 1312, or both the supply portion 1311 and the terminal portion 1312, and as a result, the electricity of the terminal portion 1312 may be blocked from being supplied to the supply portion 1311, thereby improving safety.

Meanwhile, the deformation temperature may be 70 °C or higher. Preferably, the deformation temperature may be 120 °C or higher. Here, when the deformation temperature is 70 °C or lower, there is a problem that the deformation body 13132 may be deformed even in a heat source generated during normal operation of the secondary battery 1, and when it is 120 °C or higher, the secondary battery 1 may explode or rupture before the deformation body 13132 is deformed.

Meanwhile, the deformation body 13132 may have a shape surrounding the outside of the insulator 13131. Accordingly, the deformation body 13132 may be fixed to the insulator 13131 without a separate fixing means, thereby increasing the coupling properties and simplifying the structure.

For example, the insulator 13131 may have a cylindrical shape, and the deformation body 13132 may have a circular ring shape to surround the cylindrical insulator 13131. Of course, the insulator 13131 and the deformation body 13132 may have shapes such as a square and a square ring, a triangle and a triangular ring, an ellipse and an elliptical ring, and the like.

Meanwhile, one end of the deformation body 13132 may be fixed to the supply portion 1311 or the terminal portion 1312. In particular, one end of the deformation body 13132 may be fixed to the supply portion 1311 or the terminal portion 1312 by an adhesive or thermal fusion. Accordingly, the fixing force of the deformation body 13132 may be increased. For example, as shown in FIG. 3, the lower end of the deformation body 13132 may be fixed to the upper surface of the terminal portion 1312 by an adhesive or the like. Accordingly, when the deformation body 13132 contracts, the upper portion of the deformation body 13132 contracts downward, and as a result, the supply portion 1311 and the deformation body 13132 are separated, thereby cutting off the electricity supply.

Meanwhile, the height of the electricity cut-off portion 1313 may be formed to be 2 mm to 12 mm so as to minimize the spaced distance between the supply portion 1311 and the terminal portion 1312. Here, when the height of the electricity cut-off portion 1313 is 2 mm or lower, even if the deformation body 13132 contracts above the deformation temperature, it is difficult to cut off electricity between the supply portion 1311 and the terminal portion 1312 because the shrinkage amount of the deformation body 13132 is small, and there is a problem that electricity may flow when the supply portion 1311 and the deformation body 13132 or the terminal portion 1312 and the deformation body 13132 separated come into contact again by an external impact. When the height of the electricity cut-off portion 1313 is 12 mm or higher, the electricity between the supply portion 1311 and the terminal portion 1312 may be rapidly cut off above the deformation temperature, but there is a problem that the volume of the secondary battery increases as the height of the top cap 131 increases unnecessarily.

Meanwhile, the supply portion 1311 and the electricity cut-off portion 1313 may have the same diameter as the terminal surface 13121. Accordingly, it is possible to prevent a step between the supply portion 1311 and the electricity cut-off portion 1313 or the terminal surface 13121 and the electricity cut-off portion 1313.

In the secondary battery 1 according to Embodiment 1 of the present disclosure having such a structure, the deformation body 13132 does not contract when a temperature inside the battery is below the deformation temperature during charging and discharging, so that the electricity of the electrode assembly 11 is transmitted to the external circuit through the terminal portion 1312, the deformation body 13132, and the supply portion 1311 of the top cap 131. Here, when a temperature of the secondary battery rises above the deformation temperature due to overcharging, the deformation body 13132 contracts and one end of the deformation body 13132 is separated from the supply portion 1311, and accordingly, the electricity of the electrode assembly 11 is transmitted to the terminal portion 1312 and the deformation body 13132 of the top cap 131, but is not transmitted to the supply portion 1311, thereby being unable to supply electricity to the external circuit, resulting in rapidly cutting off electricity.

Therefore, the secondary battery 1 according to Embodiment 1 of the present disclosure includes a top cap 131 having a supply portion 1311, a terminal portion 1312, and an electricity cut-off portion 1313, so that electricity may be rapidly cut off when high heat above the deformation temperature is generated, thereby significantly improving safety.

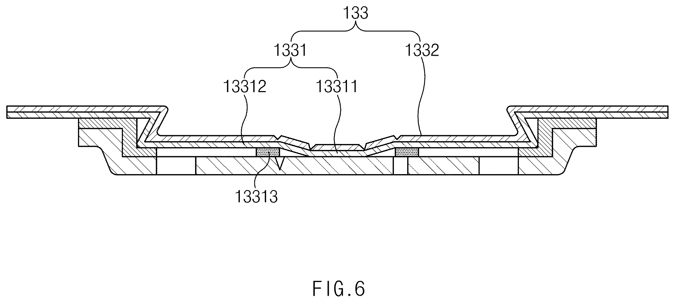

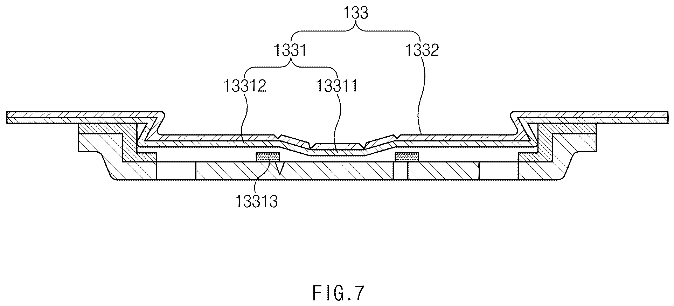

FIG. 6 is a cross-sectional view showing a safety vent of a secondary battery according to Embodiment 1 of the present disclosure, and FIG. 7 is a cross-sectional view showing a state in which a safety vent of a secondary battery according to Embodiment 1 of the present disclosure is contracted.

Meanwhile, the safety vent 133 includes a first deformation body 1331 that electrically contacts the bottom cap 134 below the deformation temperature and is deformed above the deformation temperature to be electrically separated from the bottom cap 134.

That is, the first deformation body 1331 is deformed above the deformation temperature in the same way as the deformation body included in the top cap 131 to be electrically separated from the bottom cap 134, thereby rapidly cutting off electricity.

Here, the first deformation body 1331 may be made of the same material as the deformation body described above. That is, the first deformation body 1331 may be made of a shape memory alloy that contracts above the deformation temperature.

Meanwhile, the deformation temperature at which the first deformation body 1331 is deformed is the same as the deformation temperature at which the deformation body described above is deformed.

Meanwhile, the first deformation body 1331 includes a contact portion 13311 that protrudes to contact the bottom cap 134 and a non-contact portion 13312 that does not contact the bottom can 12, and a second insulator 13313 may be provided between the non-contact portion 13312 and the bottom cap 134. That is, the second insulator 13313 may block the non-contact portion 13312 from electrically contacting the bottom cap 134.

Meanwhile, the safety vent 133 further includes a second deformation body 1332 provided on the upper surface of the first deformation body 1331 that does not face the bottom cap 134 and having insulating properties.

That is, the second deformation body 1332 is not deformed below the deformation temperature, and is deformed above the deformation temperature to separate the first deformation body 1331 and the bottom cap 134 so as not to conduct electricity, thereby rapidly cutting off electricity.

That is, the safety vent 133 has a two-stage structure composed of the first deformation body 1331 and the second deformation body 1332, and accordingly, it rapidly contracts above the deformation temperature, thereby rapidly blocking contact with the bottom cap 134.

Meanwhile, the second deformation body 1332 may be a shape memory polymer that contracts above the deformation temperature.

Therefore, the secondary battery 1 according to Embodiment 1 of the present disclosure further includes the safety vent 133 composed of the first deformation body 1331 and the second deformation body 1332, thereby rapidly cutting off electricity when high heat above the deformation temperature is generated, resulting in improving safety.

Hereinafter, in describing other embodiments of the present disclosure, the same reference numerals are used for configurations having the same function as the above-described embodiments, and redundant descriptions are omitted.

### [Secondary battery according to embodiment 2 of the present disclosure]

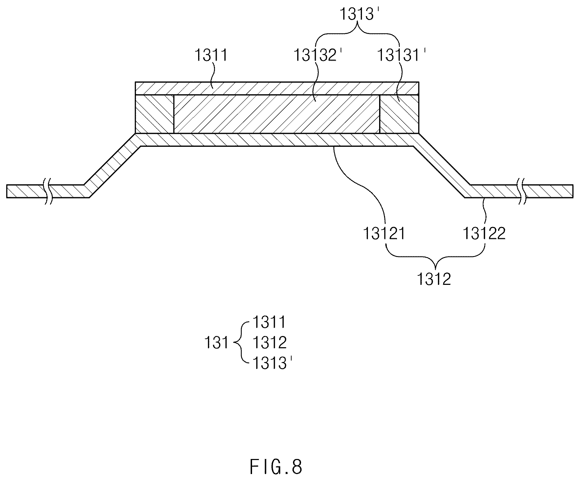

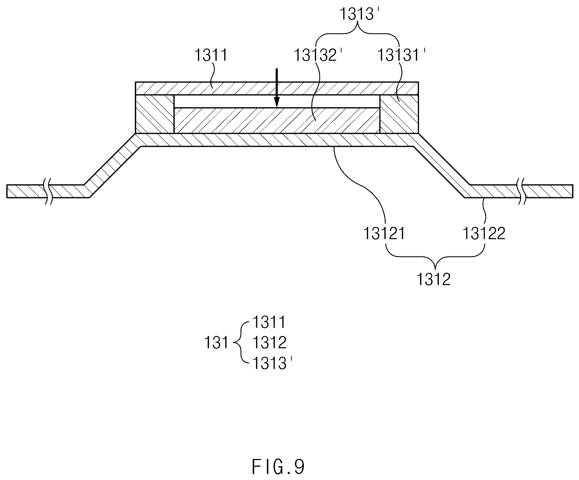

FIG. 8 is a perspective view showing a top cap according to Embodiment 2 of the present disclosure, and FIG. 9 is a cross-sectional view showing a state in which a deformation body of a secondary battery according to Embodiment 2 of the present disclosure is contracted.

As shown in FIGS. 8 and 9, a secondary battery 1 according to Embodiment 2 of the present disclosure includes a top cap 131, wherein the top cap 131 includes a supply portion 1311 that supplies electricity to an external circuit, a terminal portion 1312 that supplies electricity to the supply portion 1311, and an electricity cut-off portion 1313' that electrically connects the supply portion 1311 and the terminal portion 1312 or disconnects them so as not to conduct electricity depending on the deformation temperature.

Here, the electricity cut-off portion 1313' includes an insulator 13131' provided between the supply portion 1311 and the terminal portion 1312 and allowing the supply portion 1311 and the terminal portion 1312 to be spaced apart so as not to contact each other, and a deformation body 13132' that electrically connects the supply portion 1311 and the terminal portion 1312 below the deformation temperature and is deformed above the deformation temperature to disconnect the supply portion 1311 and the terminal portion 1312 so as not to conduct electricity.

Here, the deformation body 13132' is provided in a through hole that penetrates the upper surface of the insulator 13131' in the vertical direction, and has a structure in which both ends thereof contact the supply portion 1311 and the terminal portion 1312, respectively, so that there is no need to separately fix the deformation body 13132', thereby simplifying the structure and increasing the efficiency of work.

Therefore, in the secondary battery 1 according to Embodiment 2 of the present disclosure, when high heat above the deformation temperature is generated, the deformation body 13132' contracts as shown in FIG. 9, thereby rapidly blocking the electricity supply, resulting in improving safety.

The scope of the present disclosure is indicated by the claims described below rather than the detailed description above, and various embodiments derived from the meaning and scope of the claims and the equivalents thereof are possible.

### [List of Reference Numerals]

1: Secondary battery
11: Electrode assembly
12: Can
13: Cap assembly
131: Top cap
1311: Supply portion
1312: Terminal portion
13121: Terminal surface
13122: Coupling surface
1313: Electricity cut-off portion
13131: Insulator
13132: Deformation body
132: Safety element
133: Safety vent
1331: First deformation body
13311: Contact portion
13312: Non-contact portion
13313: Second insulator
1332: Second deformation body
134: Bottom cap
135: First insulator
136: Gasket

## Claims

1. A top cap comprising:
a supply portion that supplies electricity to an external circuit;
a terminal portion that supplies electricity to the supply portion; and
an electricity cut-off portion that electrically connects the supply portion and the terminal portion or disconnects them so as not to conduct electricity depending on the deformation temperature,
wherein the electricity cut-off portion comprises:
an insulator provided between the supply portion and the terminal portion and allowing the supply portion and the terminal portion to be spaced apart so as not to contact each other; and
a deformation body that electrically connects the supply portion and the terminal portion below the deformation temperature and is deformed above the deformation temperature to disconnect the supply portion and the terminal portion so as not to conduct electricity.

2. The top cap according to claim 1,
wherein the deformation body is made of a shape memory alloy that contracts above the deformation temperature.

3. The top cap according to claim 1,
wherein the deformation temperature is 70 °C or higher.

4. The top cap according to claim 1,
wherein the deformation body has a shape surrounding the outside of the insulator.

5. The top cap according to claim 4,
wherein the insulator has a cylindrical shape, and
the deformation body has a circular ring shape surrounding the insulator.

6. The top cap according to claim 1,
wherein the insulator is formed with a through hole penetrating in the direction of the supply portion and the terminal portion, and
the deformation body is inserted into the through hole of the insulator, and both ends thereof are in contact with the supply portion and the terminal portion, respectively.

7. The top cap according to claim 1,
wherein one end of the deformation body is fixed to the supply portion or the terminal portion.

8. The top cap according to claim 1,
wherein the height of the electricity cut-off portion is formed to be 2 mm to 12 mm.

9. The top cap according to claim 1,
wherein the terminal portion comprises:
a terminal surface that supplies electricity to the supply portion, and
a coupling surface provided below the terminal surface and having a larger diameter than the terminal surface,
wherein the supply portion and the electricity cut-off portion have the same diameter as the terminal surface.

10. A cap assembly comprising:
a top cap that supplies electricity to an external circuit and is provided according to claim 1;
a safety element (Positive Temperature Coefficient element) provided below the top cap;
a safety vent (Current Interrupt Device) provided below the safety element;
a bottom cap provided below the safety vent; and
a first insulator provided between the safety vent and the bottom cap.

11. The cap assembly according to claim 10,
wherein the safety vent comprises a first deformation body that electrically contacts the bottom cap below the deformation temperature and is deformed above the deformation temperature to be electrically separated from the bottom cap.

12. The cap assembly according to claim 11,
wherein the first deformation body is made of a shape memory alloy that contracts above the deformation temperature.

13. The cap assembly according to claim 12,
wherein the first deformation body comprises a contact portion that protrudes to contact the bottom cap and a non-contact portion that does not contact the bottom cap, and
a second insulator is provided between the non-contact portion and the bottom cap.

14. The cap assembly according to claim 10,
wherein the safety vent further comprises a second deformation body provided on the upper surface of the first deformation body that does not face the bottom cap and having insulating properties.

15. The cap assembly according to claim 14,
wherein the second deformation body is made of a shape memory polymer that is not deformed below the deformation temperature and is deformed above the deformation temperature.

16. A secondary battery comprising a cap assembly according to claim 10.
